# EUROPEAN PATENT SPECIFICATION

(11) **EP 3 994 320 B1**
(45) Date of publication and mention of the grant of the patent: **16.09.2026**
(21) Application number: 20735456.4
(22) Date of filing: 18.06.2020
(51) Int. Cl.: E04F 15/024, F16B 43/00, F16B 45/02

(54) **A CONNECTION SYSTEM**
VERBINDUNGSSYSTEM
SYSTÈME DE LIAISON

(30) Priority: 04.07.2019 BE 201905430
(43) Date of publication of application: 11.05.2022
(73) Proprietor: Unilin, BV, 8710 Wielsbeke (BE)
(72) Inventor: COUDENYS, Geert, 9880 Lotenhulle (BE); NEL, Koen, 8500 Kortrijk (BE)
(74) Representative: Unilin Technologies
(86) International application number: PCT/IB2020/055688
(87) International publication number: WO 2021/001712

(56) References cited:
- WO-A1-2006/069996
- FR-A1- 2 626 629
- FR-A1- 2 687 195
- US-A- 3 989 984
- US-A1- 2006 016 135
- US-A1- 2009 184 199

## Description

The invention relates to a connection system, comprising a panel, a support for supporting the panel and an electrically conductive connecting member provided with a head and a shank for fastening the panel and the support to each other, wherein a top side of the panel which, in a fastened position of the connection system, faces away from the support, is provided with a coating layer having a lower electrical conductivity than the connecting member, and preferably the support, wherein, in the fastened position of the connection system, the head is at least partially accommodated in a recess of the panel and the shank passes through the panel and is fastened to the support in such a way that the panel is retained between the head and the support.

Such a connection system is known in the prior art. The known connection system is used in intermediate floors, for example in an intermediate floor of a building used to store goods. The intermediate floor comprises panels which are attached to a support. In the known connection system, the panel is a substrate with a melamine coating layer and the connecting member is a self-tapping screw with a countersunk head and a shank which, in the fastened position of the connection system, is screwed through the panel and into the support. Due to the relatively poor electrical conductivity of the melamine coating layer of the panel, a static charge may be produced when objects are moved across the panel. When, for example, self-propelled vehicles drive across the panels, the electronics present therein could suffer interference due to a discharge of static electricity.

US2009/184199A1 discloses a shielding arrangement for the lightning protection of electrical lines and components in an aircraft. The shielding arrangement includes a protected installation space for receiving the lines that is arranged in the region of a floor framework. At least one delimiting surface of the installation space is provided at least in certain regions with an electrically conductive shielding. The at least one delimiting surface of the installation space being formed with at least one floor panel and a further delimiting surface of the installation space being formed with at least one ceiling panel.

US3989984A discloses lightning protection means for aircraft structural components. The lightning protection means includes thin, perforated, dielectric and metallic layers applied to the ordinarily lightning-accessible surfaces of composite structures. Where the outer metallic layer of the lightning protection means is formed from sprayed metal, ground connection means to the metallic layer preferably comprises a section of wire screen fused with the sprayed metal on the dielectric layer, a thin metal plate brazed to the wire screen, and a metal attachment connecting the metal plate to adjacent ground structure. The metal attachment can comprise a metal bolt and a metal washer. Composite-to-metal or composite-to-composite structural joints are protected by making the entire bonded and bolted interface areas conductive for transfer of lightning current, or by isolating the bonded interface area to control the transfer path of the lightning current through the bolted interface area only.

WO 2006/069996 A1 discloses a further example of lightning strike protection means for aircraft.

It is an object of the present invention to provide a connection system by means of which the build-up of static charge in the panel is minimised and wherein an increased electrical conductivity of the surface is produced.

The invention is described in independent claim 1. Preferred embodiments are described in the dependent claims.

This object is achieved by the connection system according to the invention, wherein the connecting member passes through a ring provided with a flange which bears against the top side of the panel in the fastened position of the connection system.

An advantage of the connection system according to the invention is the fact that the flange produces a relatively large contact surface between the connecting member and the coating layer of the panel. This results in a discharge of static electricity from the coating layer via the connecting member to an electrical conductor and/or earthing means which is preferably situated underneath, for example to the support. It should be noted that a lower electrical conductivity may be interpreted as a higher electrical resistance.

The connecting member comprises a head part which is fixedly connected to the shank. The ring is provided with the flange and, in the fastened position of the connection system, the shank passes through the ring and the ring is retained between the head part and the panel in the longitudinal direction of the shank. In this case, the ring forms a separate component and the head part forms a single part with the shank. For example, if the head part and the shank form a screw, during fastening, the ring may retain a fixed position with respect to the panel and the head part may turn with respect to the ring. This minimizes the risk of damage to the coating layer by the flange.

The ring may comprise a recess for accommodating at least a portion of the head part. As a result thereof, the head part only has to protrude slightly above the ring, if at all, in the fastened position of the connection system.

Interacting parts of the head part and the recess may be conical. As a result thereof, the head part and the ring may be retained with respect to each other in a direction at right angles to the shank. In addition, a substantial contact surface may be produced between the head part and the ring by means the conical surfaces, in such a way that a good electrical charge transfer can take place via these surfaces.

According to the invention, the ring is made of brass, because this material is a good conductor of electrical current.

According to the invention, the flange is situated on an axial end of the ring, which end, in the fastened position of the connection system, faces away from the support in order to make the ring protrude as little as possible over the top side of the panel.

Preferably, the abovementioned ring is partially countersunk, i.e. the ring is situated partially inside a bore or another recess in the surface of the panel. Preferably, the ring for the largest axial dimension is countersunk and preferably only the abovementioned flange protrudes above the surface.

The flange is at least partially pushed into the top side of the panel. A slanting side of the flange is pulled into the thickness of the coating layer partially or at least along the entire thickness. This has the advantage that a close contact can be achieved between the flange and the top side of the panel. As a result thereof, discharge of static electricity from the coating layer via the connecting member is improved still further. Preferably, in the direction facing away from its axis, the flange is bent in the direction of the underside of the panel. This ensures that the flange is securely pushed into the top side of the panel, resulting in a very close contact between the flange and the coating layer of the panel. This improves the discharge of static charges.

The thickness of the flange may gradually decrease in an outward direction thereof. As a result, a sharp upright edge at the location of the ring can be minimised.

The design of the ring is preferably such that the head part of the fastening member is completely countersunk therein. Preferably, the flange has a limited thickness, for example, inter alia the limited thickness in its axial direction, for example in such a way that the ring protrudes less than 5 mm, or 3 mm or less, above the surface of the panel. Each of these design features separately and in combination ensures that the fastening member does not form an obstacle, or hardly, for, for example, self-propelled robots, in particular for the wheels thereof, which can thus be spared premature wear.

The shank is provided with screw thread for screwing the shank into the support.

This is a self-tapping screw thread. If the support is made, for example, from thin-walled metal, the use of a self-tapping screw is efficient.

The coating layer is a melamine-soaked paper sheet, which is fixed onto the substrate via a laminating process.

The coating layer may contain electrically conductive additives in order to achieve a conductivity which is closer to that of the materials from which the connecting member and, if desired, the support are made. To this end, it is possible to use, for example, the additives which are known per se for laminate floors from EP 1 567 334.

The number of connecting members per square metre of the panel may be greater than 4, preferably between 4 and 12 or between 4 and 8, in order to create a sufficient number of locations for discharging static electricity.

It will be clear that the abovementioned connecting member preferably provides an electrically conductive connection to an electrical conductor which is situated on the underside of the abovementioned panel, wherein this conductor is preferably directly or indirectly connected to an earthing means. The electrical conductor may, for example, comprise the abovementioned support, which may then be earthed as such, and has a higher electrical conductivity than the abovementioned coating layer. According to another possibility, or in combination therewith, the abovementioned panel may be provided with a conductive film/foil or layer on its underside, such as with a metal foil or layer, wherein this film/foil or layer is preferably directly or indirectly connected to an earthing means. The connection to the earthing means may be brought about, for example, by contact with a conductive and earthed support.

The invention will be explained below in more detail by means of drawings which show an exemplary embodiment of the invention in highly diagrammatic form and in which:
Fig. 1 shows a cross-sectional view of an intermediate floor in which a connection system according to the invention is used.
Fig. 2 shows an enlarged view of a part of Fig. 1 which illustrates the intermediate floor in its unmounted position.
Fig. 3 shows the same view as in Fig. 2, in which an exemplary embodiment of the connection system according to the invention is illustrated.
Fig. 4 shows the same view as in Fig. 3, but shows a part of Fig. 3 on an enlarged scale.
Fig. 5 shows, in the same view as in Fig. 4, an alternative embodiment of the flanged ring.
Figs. 6 - 12 show, in the same view as in Fig. 4, further embodiments of the flanged ring.

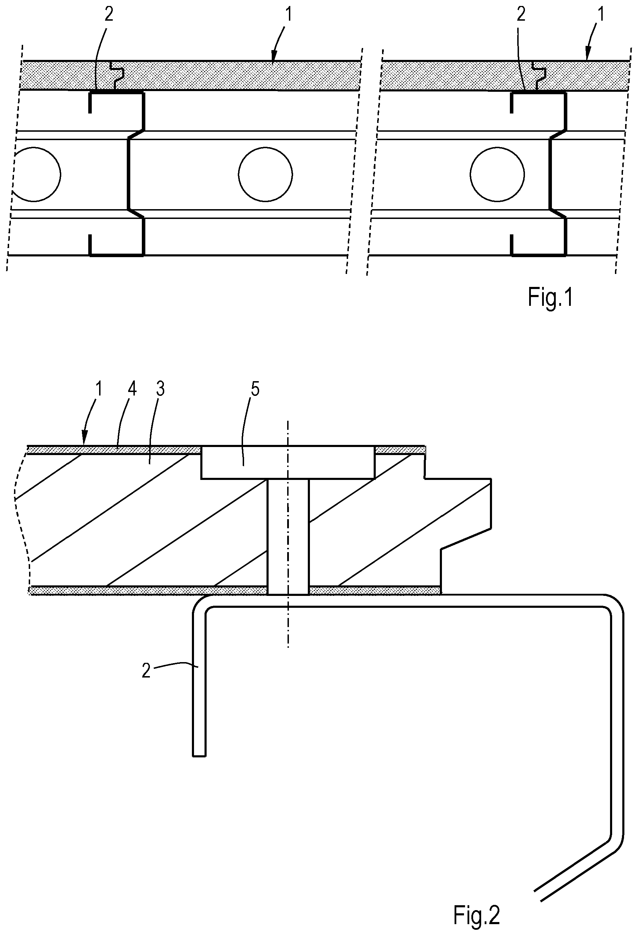

Fig. 1 shows a part of an intermediate floor in a building. The intermediate floor is composed of panels 1 which are laid on a support in the form of a supporting structure comprising beams 2. The panels 1 are provided with interacting coupling means, in this case a tongue and a groove. In this case, the beams 2 of the supporting structure are made of a stainless steel plate material and is therefore readily electrically conductive. The panels 1 each have a substrate 3 made of chipboard, the top side of which is provided with a melamine coating layer 4, in the form of a melamine-soaked paper sheet which is fixed onto the substrate 3 via a laminating process. Fig. 1 shows that mutually opposite edge portions of a panel 1 are situated on two parallel beams.

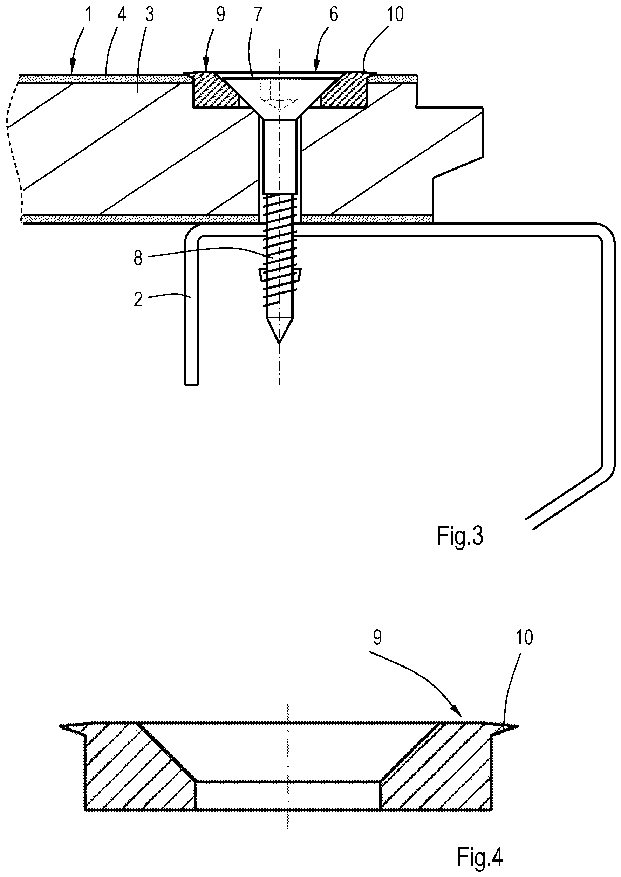

Because melamine is a poor electrical conductor, static charge may be produced in the coating layer 4 when moving objects across the intermediate floor of the panels 1. The present invention provides a connection system for fastening the panels 1 to the beams 2 which minimizes the build-up of static charge. The connection system is explained by means of Figs. 2-4. Fig. 2 shows a recess 5 in the panel 1 and Fig. 3 shows that a connecting member is situated in the recess 5. Fig. 3 shows the connection system in a fastened position.

The connecting member has a head 6 which is in itself subdivided into, on the one hand,a head part 7 of a self-tapping screw with a shank 8 and, on the other hand, a ring 9 through the shank 8 passes and which, in the illustrated fastened position, is situated partially under the head part 7. In the fastened position illustrated in Fig. 3, the head part 7 and the ring 9 are situated partially in the recess 5 of the panel 1. In this position, the shank 8 passes through the panel 1 and is screwed into the beam 2 of the supporting structure. The panel 1 is thus retained between the ring 9 and the beam 2. In the illustrated exemplary embodiment, the head part 7 is provided with a depression for accommodating an matching Allen key, but several alternatives are conceivable for this. As can clearly be seen from Fig. 3, the flange is partially pushed into the top side of the panel.

Fig. 4 shows the ring 9 on an enlarged scale. The ring 9 is made of brass and is therefore a good electrical conductor. The screw, which comprises the head part 7 and the shank 8, is also made of an electrically conductive material, for example stainless steel. One axial end of the ring 9 is provided with a flange 10 which, in the fastened position of the connection system, bear against the top side of the panel 1, see Fig. 3. Thus, the ring 9, via the flange 10, forms a relatively large contact surface with the relatively poorly electrically conductive coating layer 4.

Fig. 4 shows that the thickness of the flange 10 gradually decreases in its outward direction. As a result thereof, an upright edge which extends from the top side of the panel 1 is minimised at the location of the ring 9, which is an advantage if it is desired that the top surface of the intermediate floor is as smooth as possible. Fig. 4 furthermore shows that the ring 9 comprises a conical depression for accommodating a conical portion of the head part 7 of the screw which fits therein.

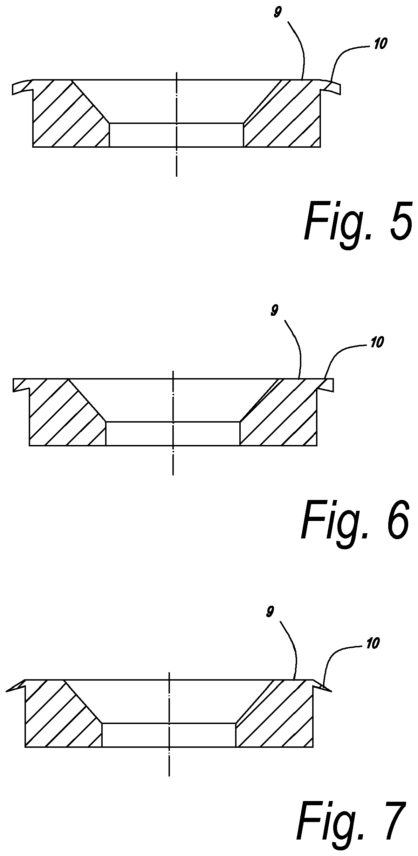

Fig. 5 shows, in the same view as in Fig. 4, an alternative embodiment of the ring 9 with flange 10. In the direction facing away from its axis, the flange 10 is bent in the direction of the underside of the panel. As a result thereof, the flange can readily be pushed into the top side of the panel. This ensures close conductive contact of the flange with the coating layer of the panel.

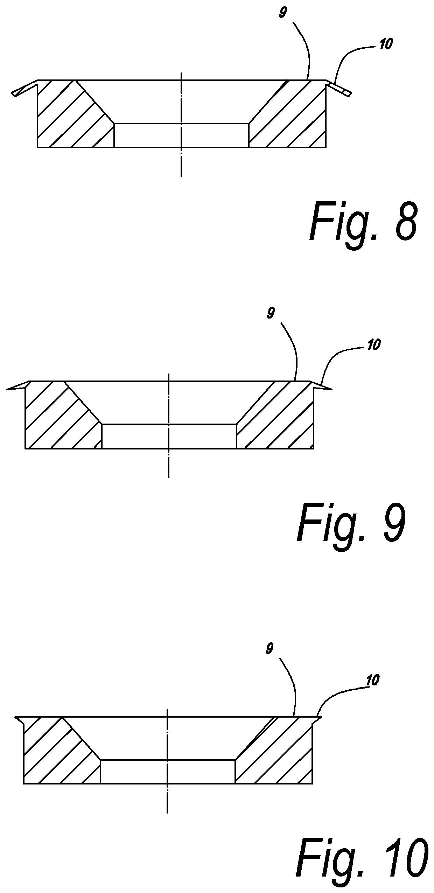

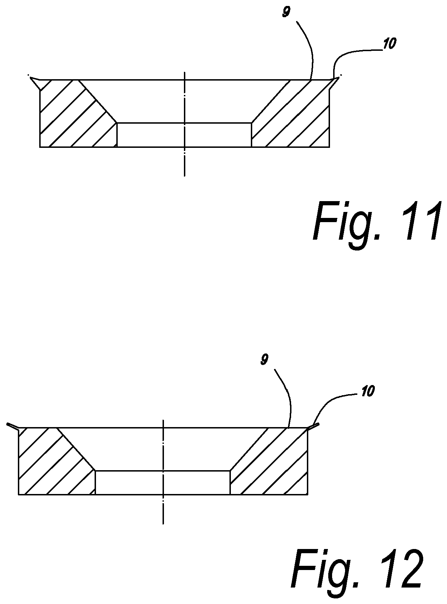

Figs. 6 - 12 show, in the same view as in Fig. 4, further embodiments of the ring 9 with flange 10. In the embodiments from Figs. 6, 7 and 8, the flange 10, in the direction away from its axis, is bent in the direction of the underside of the panel. In Figs. 11 and 12, the flange is bent in the other direction. In the embodiments from Figs. 9 and 10, the flange 10 contains a surface (in Fig. 9 the bottom surface and in Fig. 10 the top surface) which will come to lie parallel with the surface of the panel in which the ring is used.

The invention is not limited to the exemplary embodiments illustrated in the drawings and described above which may be varied in various ways without departing from the scope of the invention as defined in the appended claims.

## Claims

1. Connection system, comprising a panel (1), a support (2) for supporting the panel (1) and an electrically conductive connecting member for fastening the panel (1) and the support (2) to each other, wherein said panel (1) is laid on the support (2), the support (2) being in the form of a supporting structure comprising beams (2), wherein the panel (1) has a substrate (3) and a top side which is a coating layer (4), with the coating layer (4) having a lower electrical conductivity than the connecting member, wherein the electrically conductive connecting member comprises a screw, said screw comprising a head part (7) and a shank (8) and being made of an electrically conductive material, wherein the top side of the panel (1), in a fastened position of the connection system, faces away from the support (2), wherein the connecting member further comprises a ring (9), wherein, in the fastened position of the connection system, the head part (7) and the ring (9) are at least partially accommodated in a recess (5) of the panel (1) and the shank (8) is screwed into the support (2) in such a way that the panel (1) is retained between the ring (9) and the support (2), wherein one axial end of the ring (9) is provided with a flange (10) which, in the fastened position of the connection system, bears against the top side of the panel (1), wherein the screw passes through the ring (9), **characterised in that** the screw is a self-tapping screw, the panel (1) is provided with interacting coupling means in the form of a tongue and groove, the substrate (3) is made of chipboard, the coating layer (4) is a melamine coating layer (4) in the form of a melamine-soaked paper sheet which is fixed onto the substrate (3) via a laminating process, and the ring (9) is made of brass.

2. Connection system according to Claim 1, wherein the ring (9) comprises a recess for accommodating at least a portion of the head part (7), preferably wherein interacting parts of the head part (7) and the recess are conical.

3. Connection system according to one of the preceding claims, wherein the flange (10), in the direction away from its axis, is bent in the direction of the underside of the panel (1).

4. Connection system according to one of the preceding claims, wherein the thickness of the flange (10) gradually decreases in an outward direction thereof.

5. Connection system according to one of the preceding claims, wherein the coating layer (4) contains electrically conductive additives.

6. Connection system according to one of the preceding claims, wherein the number of connecting members (7, 8, 9) per square metre of the panel is greater than 4, preferably between 4 and 12 or between 4 and 8.

7. Connection system according to one of the preceding claims, wherein the abovementioned connecting member provides an electrically conductive connection to an electrical conductor which is situated on the underside of the abovementioned panel, wherein this conductor is preferably directly or indirectly connected to an earthing means.

8. Connection system according to one of the preceding claims, wherein the abovementioned panel is provided with a metal foil or layer, wherein this film/foil or layer is preferably directly or indirectly connected to an earthing means.

9. Connection system according to one of the preceding claims, wherein the abovementioned support (2) has a higher electrical conductivity than the abovementioned coating layer (4), wherein the abovementioned support (2) is preferably directly or indirectly connected to an earthing means.

## Patentansprüche

1. Verbindungssystem, das ein Paneel (1), einen Träger (2) zum Tragen des Paneels (1) sowie ein elektrisch leitendes Verbindungselement, das dazu bestimmt ist, das Paneel (1) und den Träger (2) miteinander zu befestigen; wobei das oben genannte Paneel (1) auf dem Träger (2) aufliegt; wobei der Träger (2) die Form einer Trägerstruktur aufweist, die Profile (2) umfasst; wobei das Paneel (1) ein Substrat (3) und eine obere Seite aufweist, die eine Deckschicht (4) darstellt; wobei die Deckschicht (4) eine geringere elektrische Leitfähigkeit aufweist als das Verbindungselement; wobei das elektrisch leitfähige Verbindungselement eine Schraube umfasst; wobei die oben genannte Schraube einen kopfförmigen Teil (7) und einen Schaft (8) umfasst und aus einem elektrisch leitfähigen Material gefertigt ist; wobei die obere Seite des Paneels (1) in einer Position, in der das Verbindungssystem befestigt ist, von dem Träger (2) abgewandt ist; wobei das Verbindungselement ferner einen Ring (9) umfasst; wobei in der Position, in der das Verbindungssystem befestigt ist, der kopfförmige Teil (7) und der Ring (9) zumindest teilweise in einer Aussparung (5) des Paneels (1) aufgenommen sind und der Schaft (8) derart in den Träger (2) eingeschraubt ist, dass das Paneel (1) zwischen dem Ring (9) und dem Träger (2) gehalten wird; wobei ein axiales Ende des Rings (9) mit einem Flansch (10) versehen ist, der in der Position, in der das Verbindungssystem befestigt ist, sich auf der oberen Seite des Paneels (1) abstützt; wobei die Schraube den Ring (9) durchdringt; **dadurch gekennzeichnet, dass** die Schraube eine selbstschneidende Schraube ist, das Paneel (1) mit einem ineinandergreifenden Verbindungssystem in Form einer Feder und einer Nut versehen ist, das Substrat (3) aus einer Spanplatte besteht, die Deckschicht (4) eine Deckschicht (4) auf Basis von Melamin in Form eines mit Melamin imprägnierten Papierbogens ist, der durch ein Laminierverfahren auf dem Trägermaterial (3) befestigt ist, und der Ring (9) aus Messing besteht.

2. Verbindungssystem nach Anspruch 1, wobei der Ring (9) eine Aussparung aufweist, in die mindestens ein Abschnitt des kopfförmigen Teils (7) eingreift; wobei vorzugsweise die ineinandergreifenden Teile des kopfförmigen Teils (7) und der Aussparung eine konische Form aufweisen.

3. Verbindungssystem nach einem der vorstehenden Ansprüche, wobei der Flansch (10) in Richtung weg von seiner Achse auf die untere Seite des Paneels (1) hin gefaltet ist.

4. Verbindungssystem nach einem der vorstehenden Ansprüche, wobei die Dicke des Flansches (10) in eine nach außen gerichtete Richtung allmählich verringert.

5. Verbindungssystem nach einem der vorstehenden Ansprüche, wobei die Deckschicht (4) elektrisch leitfähige Additive enthält.

6. Verbindungssystem nach einem der vorstehenden Ansprüche, wobei die Anzahl der Verbindungselemente (7, 8, 9) pro Quadratmeter des Paneels größer als 4 ist, vorzugsweise zwischen 4 und 12 oder zwischen 4 und 8 liegt.

7. Verbindungssystem nach einem der vorstehenden Ansprüche, wobei das Verbindungselement, das oben erwähnt wurde, eine elektrisch leitende Verbindung zu einem elektrischen Leiter bereitstellt, der an der unteren Seite des Paneels liegt, die oben erwähnt wurde; wobei dieser Leiter vorzugsweise direkt oder indirekt mit einer Erdungsvorrichtung verbunden ist.

8. Verbindungssystem nach einem der vorstehenden Ansprüche, wobei das Paneel, das oben erwähnt wurde, mit einer Metallschicht oder -folie versehen ist; wobei dieser Film oder diese Schicht vorzugsweise direkt oder indirekt mit einer Erdungsvorrichtung verbunden ist.

9. Verbindungssystem nach einem der vorstehenden Ansprüche, wobei der Träger (2), der oben erwähnt wurde, eine höhere elektrische Leitfähigkeit aufweist, als die Deckschicht (4), die oben erwähnt wurde; wobei der Träger (2), der oben erwähnt wurde, vorzugsweise direkt oder indirekt mit einer Erdungsvorrichtung verbunden ist.

## Revendications

1. Système de liaison qui comprend un panneau (1), un support (2) qui est destiné à supporter le panneau (1), ainsi qu'un élément de liaison électroconducteur qui est destiné à fixer l'un à l'autre le panneau (1) et le support (2) ; dans lequel ledit panneau (1) est déposé sur le support (2) ; dans lequel le support (2) se présente sous la forme d'une structure de support qui comprend des profilés (2) ; dans lequel le panneau (1) possède un substrat (3) et un côté supérieur qui représente une couche de revêtement (4) ; dans lequel la couche de revêtement (4) présente une conductivité électrique inférieure à celle de l'élément de liaison ; dans lequel l'élément de liaison électroconducteur comprend une vis ; dans lequel ladite vis comprend une partie faisant office de tête (7) et une tige (8) et est réalisée à partir d'un matériau électroconducteur ; dans lequel le côté supérieur du panneau (1), dans une position dans laquelle le système de liaison est fixé, est tourné vers l'extérieur du support (2) ; dans lequel l'élément de liaison comprend en outre une bague (9) ; dans lequel, dans la position dans laquelle le système de liaison est fixé, la partie faisant office de tête (7) et la bague (9) sont au moins en partie logées dans un évidement (5) du panneau (1) et la tige (8) est vissée dans le support (2) d'une manière telle que le panneau (1) est maintenu entre la bague (9) et le support (2) ; dans lequel une extrémité axiale de la bague (9) est équipée d'une bride (10) qui, dans la position dans laquelle le système de liaison est fixé, s'appuie sur le côté supérieur du panneau (1) ; dans lequel la vis traverse la bague (9) ; **caractérisé en ce que** la vis est une vis autotaraudeuse, le panneau (1) est équipé d'un système d'accouplement interactif sous la forme d'une languette et d'une rainure, le substrat (3) est constitué d'un panneau de particules, la couche de revêtement (4) est une couche de revêtement (4) à base de mélamine sous la forme d'une feuille de papier imprégnée de mélamine qui est fixée au substrat (3) par l'intermédiaire d'un procédé de laminage, et la bague (9) est constituée de laiton.

2. Système de liaison selon la revendication 1, dans lequel la bague (9) comprend un évidement pour que vienne s'y loger au moins une portion de la partie faisant office de tête (7) ; de préférence dans lequel des parties interactives de la partie faisant office de tête (7) et l'évidement possèdent une configuration de forme conique.

3. Système de liaison selon l'une quelconque des revendications précédentes, dans lequel la bride (10), dans la direction qui s'éloigne de son axe, est pliée dans la direction du côté inférieur du panneau (1).

4. Système de liaison selon l'une quelconque des revendications précédentes, dans lequel l'épaisseur de la bride (10) diminue progressivement dans la direction de cette dernière orientée vers l'extérieur.

5. Système de liaison selon l'une quelconque des revendications précédentes, dans lequel la couche de revêtement (4) contient des additifs électroconducteurs.

6. Système de liaison selon l'une quelconque des revendications précédentes, dans lequel le nombre des éléments de liaison (7, 8, 9) par mètre carré du panneau est supérieur à 4, de préférence se situe entre 4 et 12 ou entre 4 et 8.

7. Système de liaison selon l'une quelconque des revendications précédentes, dans lequel l'élément de liaison qui a été mentionné ci-dessus procure une liaison électroconductrice à un conducteur électrique qui est situé sur le côté inférieur du panneau qui a été mentionné ci-dessus ; dans lequel ce conducteur est de préférence relié de manière directe ou indirecte à un dispositif de mise à la terre.

8. Système de liaison selon l'une quelconque des revendications précédentes, dans lequel le panneau qui a été mentionné ci-dessus est muni d'une couche ou d'une feuille métallique ; dans lequel ce film/cette feuille ou cette couche est de préférence relié/e de manière directe ou indirecte à un dispositif de mise à la terre.

9. Système de liaison selon l'une quelconque des revendications précédentes, dans lequel le support (2) qui a été mentionné ci-dessus possède une conductivité électrique qui est supérieure à celle de la couche de revêtement (4) qui a été mentionnée ci-dessus ; dans lequel le support (2) qui a été mentionné ci-dessus est de préférence relié de manière directe ou indirecte à un dispositif de mise à la terre.
